Europäisches Patentamt

European Patent Office

Office européen des brevets

(19)

(11) Publication number: **0 105 656**
**A2**

# (12) EUROPEAN PATENT APPLICATION

(21) Application number: **83305476.0**

(22) Date of filing: **19.09.83**

(51) Int. Cl.³: **B 25 J 17/00**

(30) Priority: **30.09.82 JP 169556/82**

(43) Date of publication of application:
**18.04.84 Bulletin 84/16**

(84) Designated Contracting States:
**DE FR GB**

(71) Applicant: **FANUC LTD**
**5-1, Asahigaoka 3-chome Hino-shi**
**Tokyo 191(JP)**

(72) Inventor: **Nakashima, Seiichiro**
**5-3-2, Hinohon-cho**
**- Hino-shi Tokyo(JP)**

(72) Inventor: **Inagaki, Shigemi**
**3-6-12, Tokura**
**Kokubunji-shi Tokyo(JP)**

(72) Inventor: **Ito, Susumu**
**3-27, Tamadaira**
**Hino-shi Tokyo(JP)**

(74) Representative: **Massey, Alexander et al,**
**MARKS & CLERK Scottish Life House Bridge Street**
**Manchester, M3 3DP(GB)**

(54) Industrial robot.

(57) An industrial robot of the articulated arm type having a movable main body (10), an upper arm (16), a forearm (20), and a wrist assembly (30), comprises a forearm (20) provided with a rear extension (26) extending rearward of the axis ($C_2$) of articulation between the upper arm (16) and forearm (20). Servo motor ($M_2$, $M_3$, $M_4$) for driving the wrist assembly (30) are mounted on the rear extension (26) in such a manner as to counterbalance the weight of the wrist assembly (30) to ensure prompt robot motion and improve the positioning accuracy of the robot hand.

EP 0 105 656 A2

INDUSTRIAL ROBOT

BACKGROUND OF THE INVENTION

(1)  Field of the Invention

This invention relates to improvements in an industrial robot and, more particularly, to improvements in an industrial robot of the articulated arm type.

(2)  Description of the Prior Art

Known industrial robots of the articulated arm type include a robot main body mounted on a base for linear translational movement in a horizontal direction or for rotational movement about a vertical axis. An upper arm of the robot is articulated at its rear end to the main body in such a manner as to perform a swinging movement about a first horizontal pivot axis. A forearm of the robot is articulated to the frontal end of the upper arm for swinging about a second horizontal pivot axis which is parallel to the first axis. A wrist assembly of the robot is movably mounted at the frontal end of the forearm and is adapted to support a robot hand. The wrist assembly generally comprises a wrist base portion mounted on the frontal end of the forearm for rotational movement about a third axis which is parallel to the longitudinal axis of the forearm, a yoke with forked ends integrally secured to the wrist base portion, an inner wrist member mounted on the forked ends of the yoke for swinging about a fourth pivot axis which is perpendicular to the third axis, and a robot-hand mounting portion mounted on the inner wrist member for rotational movement about a fifth axis which is perpendicular to the fourth axis. The robot-hand mounting portion is adapted so that various types of exchangeable robot hands may be attached thereon according to the intended robot operation. By the combined movements of the upper arm, forearm, wrist base portion, wrist inner member, and robot-hand mounting portion, the robot hand may be displaced toward any desired three--dimensional position in any desired three-dimensional direction to perform the required robot operation such as gripping, transportation, assembly, and so on of the workpieces.

The aforementioned respective movements of the constituent members of the robot are ensured through appropriate mechanical drives such as gear drives, belt and pulley drives, and harmonic drives ("harmonic drive" being a trademark) driven by electronically controlled servo motors which are mounted on the robot itself. These servo motors often are of considerable weight. In the designing of an industrial robot, therefore, positions of the servo motors should be properly selected to ensure an optimum performance of the robot.

In the known industrial robots of the articulated arm type, however, the servo motors for driving the robot wrist assembly have been mounted on the wrist assembly itself. This results in an increase in the inertia moment of the forearm which, in turn, increases the loads imposed upon these servo motors, thereby hindering prompt motion of the robot and impairing the positioning accuracy of the robot hand.

SUMMARY OF THE INVENTION

The object of the present invention is to provide an industrial robot of the articulated arm type with a swifter movement and improved positioning accuracy.

This invention provides an industrial robot of the articulated arm type which has a movable main body mounted on a base, an upper arm articulated at its rear end to the main body for swinging about a first horizontal axis, a forearm articulated to the frontal end of the upper arm for swinging about a second horizontal axis parallel to the first axis, and a wrist assembly movably mounted at the frontal end of the forearm and adapted to support a robot hand. According to the prevent invention, the forearm is provided with a rear extension extending rearward of the second axis in alignment with the forearm and servo motors for driving the wrist assembly are mounted on the rear extension.

With this arrangement, the weight of the wrist assembly acting on the frontal end of the forearm is counterbalanced with the weight of the servo motors acting on the rear extension. The another effect of this arrangement is that the weight of the wrist assembly itself may be limited because the servo motors are mounted on locations remote therefrom. Therefore, loads to be imposed on these servo motors are reduced so that prompt robot motion with enhanced positioning accuracy is possible.

In the case where the wrist assembly comprises a wrist base portion mounted on the frontal end of the forearm for rotational movement about a third axis parallel to the longitudinal axis of the forearm, a yoke with forked ends integrally secured to the wrist base portion, an inner wrist member mounted on the forked ends of the yoke for swinging about a fourth axis perpendicular to the third axis, and a robot-hand mounting portion mounted on the inner wrist member for rotational movement about a fifth axis perpendicular to the fourth axis; the servo motors for driving the components of the wrist assembly may preferably comprise three mutually independent servo motors which, respectively, are operatively connected to the wrist assembly components for performing the respective movements of the wrist base portion, inner wrist member, and robot--hand mounting portion.

BRIEF DESCRIPTION OF THE DRAWINGS

Figure 1 is a perspective view of an industrial robot according to the invention;

Fig. 2 is a kinetic diagram of a driving system of the wrist assembly according to the present invention; and

Fig. 3 is a perspective view of another embodiment of the industrial robot according to the present invention.

### DESCRIPTION OF THE PREFERRED EMBODIMENTS

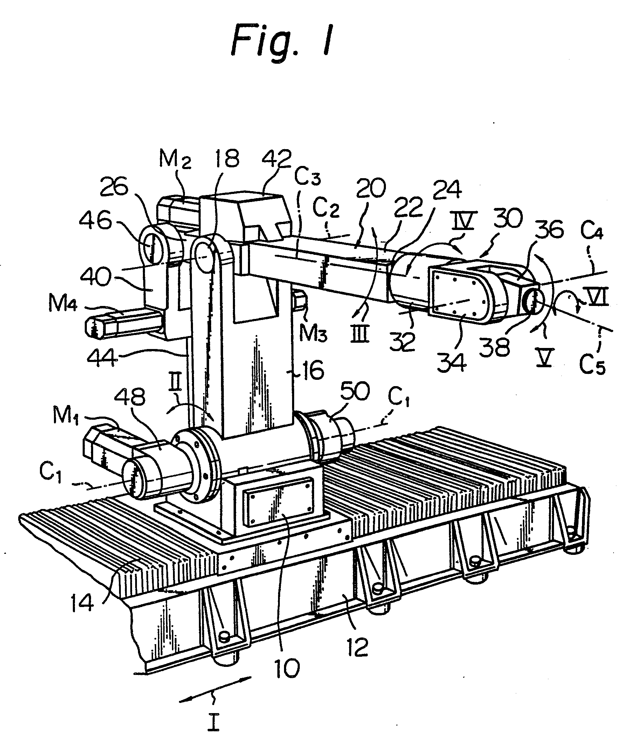

Referring now to Fig. 1, the industrial robot of the present invention comprises a main body 10 which is mounted on a horizontal base 12. The main body 10 is adapted to move linearly along the base 12 in the direction of the arrow "I" by means of, for example, a screw and nut mechanism (not shown) driven by an electric servo motor (not shown) housed in the base 12 and controlled by an electronic controller (not shown). A slideway (not shown) formed between the main body 10 and base 12 is covered by a bellows 14.

An upper arm 16 of the robot is pivoted at its rear end to the upper end of the main body 10 in such a manner as to swing about a first axis $C_1$ as shown by the arrow "II". The swinging movement of the upper arm 16 is ensured by an electronically controlled servo motor $M_1$ which drives the upper arm 16 through gear drives received within a housing 48 fixedly mounted on the main body 10.

A forearm 20 of the robot is pivoted to the frontal end of the upper arm 16 for swinging, as shown by the arrow "III", about a second axis $C_2$ which is parallel to the first axis $C_1$. As shown, the forearm 20 comprises a forearm main portion 22 extending frontward of the axis $C_2$ and a relatively short rear extension 26 extending rearward of the axis $C_2$. The swinging movement of the forearm 20 is achieved by an electronically controlled servo motor (not shown) mounted on a housing 50 in a parallel relationship with the motor $M_1$. The output of the motor on the housing 50 is transmitted to the forearm 20 through drives (not shown) received within the housing 50, a link 44, and a forked housing 40 (to be described later), pivoted at 46 to the rear end of the extension 26.

A wrist assembly 30 of the robot is mounted at the frontal end 24 of the forearm 20. The wrist assembly 30 comprises a wrist base portion 32, a yoke 34 with forked ends, an inner wrist member 36, and a robot-hand mounting portion 38. The wrist base portion 32 is rotatably supported by the frontal end 24 of the forearm 20 to rotate about a third axis $C_3$ , as shown by the arrow "IV", while the yoke 34 is made integral with the base portion 32. The inner wrist member 36 is pivoted to the forked ends of the yoke 34 for swinging about a fourth axis $C_4$ as shown by the arrow "V". The robot-hand mounting portion 38 is supported by a shaft 37 extending from within the inner wrist member 36 and is adapted to rotate about a fifth axis $C_5$ as shown by the arrow "VI".

The rotational movement of the wrist base portion 32 is achieved by an electronically-controlled servo motor $M_2$ which is mounted on the rear extension 26 and which rotates the base portion 32 through drives received in the housing 42. The swinging movement of the inner wrist member 36 is obtained by an electronically controlled servo motor $M_3$ mounted at a side of the housing 40, while the rotational movement of the robot-hand mounting portion 38 is performed by an electronically controlled servo motor $M_4$ mounted at the other side of the housing 40. The outputs of the motors $M_3$ and $M_4$ are transmitted to the inner wrist member 36 and robot-hand mounting portion 38, respectively, through drives to be described later, and received within the housing 40, forearm main portion 22, base portion 32, yoke 34, and inner wrist member 36.

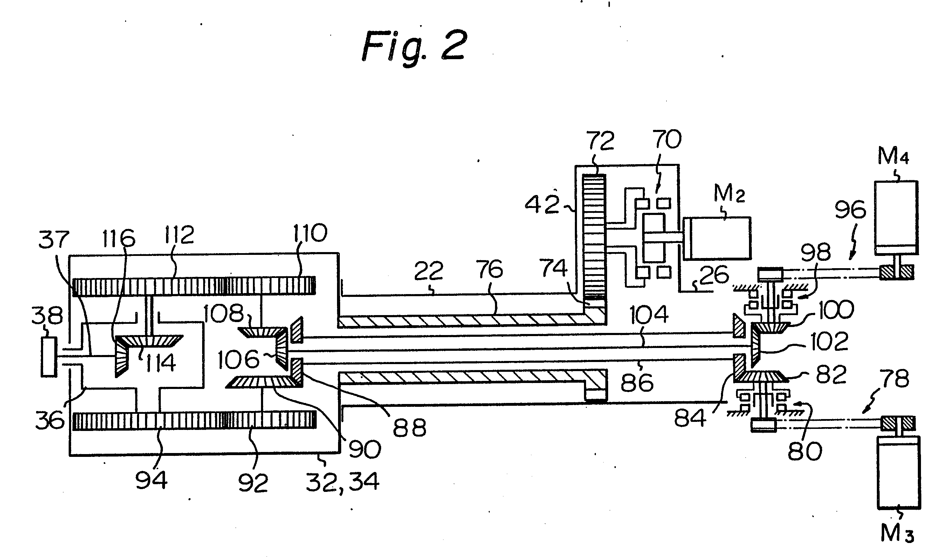

Referring to Fig. 2, an example of a driving system for transmitting the outputs of motors $M_2$ , $M_3$ , and $M_4$ to respective constituent members of the wrist assembly to achieve the afore-mentioned movements thereof is shown. In Fig. 2, the rotation of the motor $M_2$ is reduced in speed by a reduction mechanism 70 of the known "harmonic drive" type and is transmitted therefrom to a spur gear 72 meshing with a spur gear 74 mounted on a hollow shaft 76 which is integrally connected to the wrist base portion 32 so that the yoke 34 is turned in response to the rotation of the motor $M_2$.

The motor $M_3$ drives, through a belt and pulley mechanism 78, a harmonic drive 80 which, in turn, drives a bevel gear 82 which is meshed with a bevel gear 84 mounted at an end of a hollow shaft 86 which carries at the other end a bevel gear 88 which meshes with a bevel gear 90. The gear 90 drives a spur gear 92 which, in turn, rotates a spur gear 94 which, in turn, drives the inner wrist member 36 integrally connected to the gear 94 to rotate it about the axis $C_4$ in Fig. 1.

The rotation of the motor $M_4$ is transferred through a belt and pulley mechanism 96 to a harmonic drive 98 which, in turn, rotates, through a pair of bevel gears 100 and 102, a shaft 104 which, in turn, drives, through a pair of bevel gears 106 and 108, a spur gear 110 which is in meshing engagement with a spur gear 112. The rotation of the gear 112 is transmitted through a pair of bevel gears 114 and 116 to the robot-hand mounting portion 38 to turn the latter within the inner wrist member 36.

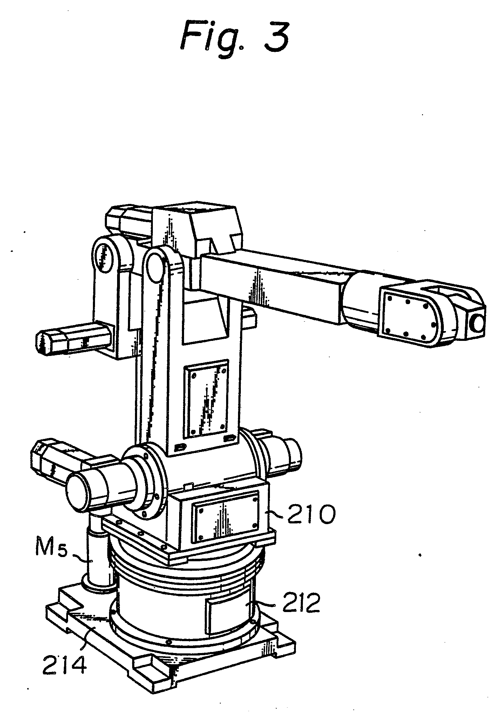

Figure 3 illustrates a second embodiment of the invention. This embodiment differs from that shown in Figs. 1 and 2 only in that the robot main body 210 is mounted for rotation on a swivel base 212 about a vertical axis, instead of being mounted for horizontal linear movement. In this embodiment, the swiveling movement of the main body 210 is achieved by a servo motor $M_5$ which is mounted on a platform 214 and which drives the main body 210 through drives with a reduction mechanism housed inside of the swivel base 212 and platform 214. These parts and members located above the swivel base 212 are identical to those of the first embodiment shown in Fig. 1.

While the invention has been described herein with reference to the specific embodiments thereof, it is not intended that the invention be limited thereby but that various modifications may be made without departing from the scope of the invention.

## CLAIMS

1. An industrial robot of the articulated arm type having a movable main body mounted on a base, an upper arm articulated at its rear end to said main body for swinging movement about a first horizontal axis, a forearm articulated to the frontal end of said upper arm for swinging movement about a second horizontal axis parallel to said first axis, and a wrist assembly mounted movably at the frontal end of said forearm and adapted to support a robot hand, characterized in that said forearm (20) comprises a rear extension (26) extending rearward of said second axis ($C_2$) in alignment with said forearm (20) and in that servo motors ($M_2$, $M_3$, $M_4$) for driving said wrist assembly (30) are mounted on said rear extension (26).

2. An industrial robot according to claim 1, wherein said wrist assembly (30) comprises a wrist base portion (32) mounted on said frontal end of the forearm (20) for rotation about a third axis ($C_3$) parallel to the longitudinal axis of said forearm, a yoke (34) with forked ends integrally secured to said wrist base portion (32), an inner wrist member (36) mounted on said forked ends of the yoke (34) for swinging about a fourth axis ($C_4$) perpendicular to said third axis ($C_3$), and a robot-hand mounting portion (38) mounted on said inner wrist member (36) for rotation about a fifth axis ($C_5$) perpendicular to said fourth axis ($C_4$), and wherein said servo motors for driving said wrist assembly (30) comprise three mutually independent servo motors ($M_2$, $M_3$, $M_4$) operatively connected to said wrist assembly (30) for performing said respective movements of said wrist base portion (32), inner wrist member (36), and robot-hand mounting portion (38).

## Fig. 1

Fig. 2

0105656

# Fig. 3

210

M5

212

214